# EUROPÄISCHE PATENTANMELDUNG

(11) **EP 3 168 113 A1**
(43) Veröffentlichungstag der Anmeldung: **17.05.2017**
(21) Anmeldenummer: 16002278.6
(22) Anmeldetag: 25.10.2016
(51) Int. Cl.: B62B 3/14, B62B 5/00

(54) **ÜBERDACHUNGSEINRICHTUNG FÜR EINEN VON HAND BEWEGBAREN TRANSPORTWAGEN SOWIE TRANSPORTWAGENEINHEIT**

(30) Priorität: 14.11.2015 DE 202015007870 U; 12.02.2016 DE 202016000917 U
(71) Anmelder: AlKuTec GmbH, 74252 Massenbachhausen (DE)
(72) Erfinder: Bolz, Michael, D-74078 Heilbronn (DE)

(57) **Zusammenfassung**

Die Erfindung betrifft eine Überdachungseinrichtung (1) für einen von Hand bewegbaren Transportwagen (15), insbesondere für einen Einkaufswagen, mit einer nach oben gerichteten Stützeinrichtung (6), die ein Dach (11) trägt.

Die Erfindung zeichnet sich dadurch aus, dass die Überdachungseinrichtung (1) fahrbar ausgebildet ist und eine Raumzone (14) zur Aufnahme des von Hand bewegbaren Transportwagens (15) aufweist.

## Beschreibung

Die Erfindung betrifft eine Überdachungseinrichtung für einen von Hand bewegbaren Transportwagen, insbesondere für einen Einkaufswagen, mit einer nach oben gerichteten Stützeinrichtung, die ein Dach trägt.

Die Erfindung betrifft ferner eine Transportwageneinheit, mit einem von Hand bewegbaren Transportwagen und mit einer Überdachungseinrichtung.

Das deutsche Gebrauchsmuster DE 295 14 432 U1 beschreibt eine Überdachungseinrichtung in Form eines Regen- und Sonnendaches für Einkaufswagen. Diese Überdachungseinrichtung ist als Nachrüstsatz konzipiert, der an einem üblichen Einkaufswagen angebracht werden kann. Der Nachrüstsatz weist eine nach oben gerichtete Stützeinrichtung auf, die mit einem Dach ausgestattet ist und die an einen Einkaufswagen angeschraubt oder angeklipst werden kann.

Der Nachrüstsatz weist einen entscheidenden Nachteil dahingehend auf, dass man sich mit einem solchen Einkaufswagen sehr schlecht in einem Einkaufsmarkt aufhalten kann. Es beginnt mit den zu erwartenden Schwierigkeiten wenn es gilt, engere Gänge zwischen den Regalen zu durchfahren und es endet mit der Gefahr, dass man mit der Überdachungseinrichtung an Schilder, Reklameplakate und dergleichen anstoßen kann, die oftmals über den Köpfen der Kunden in den Märkten angebracht sind.

Ausgehend von diesem Stand der Technik besteht die Aufgabe der Erfindung darin, eine Überdachungseinrichtung der eingangs genannten Art so weiter zu entwickeln, dass sich die eben beschriebenen Nachteile vermeiden lassen. Die Überdachungseinrichtung soll den Kunden so zur Verfügung stehen, dass diese nach erfolgtem Einkauf auswählen können, ob sie eine Überdachungseinrichtung nutzen wollen oder nicht.

Die Lösung der Aufgabe bezüglich der Überdachungseinrichtung besteht darin, dass die Überdachungseinrichtung fahrbar ausgebildet ist und eine Raumzone zur Aufnahme eines von Hand bewegbaren Transportwagens aufweist.

Die Lösung bezüglich der Transportwageneinheit besteht darin, dass sich der Transportwagen in einer durch die Überdachungseinrichtung gebildeten Raumzone befindet und dass die Überdachungseinrichtung fahrbar ausgebildet ist.

Der entscheidende Vorteil der Erfindung besteht darin, dass man in einem Einkaufsmarkt eine Anzahl solcher fahrbaren Überdachungseinrichtungen platzsparend gestapelt, und bevorzugt durch die Verwendung von Münzpfandschlössern gesichert, bereitstellen kann. Kunden, die sich nach erfolgtem Einkauf entscheiden, eine Überdachungseinrichtung nutzen zu wollen, brauchen ihren Einkaufswagen nur in die nächste vor ihnen stehende Überdachungseinrichtung einschieben, diese, wenn erforderlich, über deren Münzpfandschloss von der Reihe abkoppeln, um so zusammen mit der am Transportwagen angekoppelten Überdachungseinrichtung bei Regen zu ihren Autos zu gelangen. Die Überdachungseinrichtung wird also erst nach erfolgtem Einkauf benutzt. Eine störende Verwendung im Einkaufsmarkt findet nicht statt. Die Bereitstellung mehrer Überdachungseinrichtungen erfolgt problemlos, da die fahrbaren Überdachungseinrichtungen auf dem Boden abgestellt sind und jederzeit an den üblichen Sammelstellen für von Hand bewegbare Transportwagen, insbesondere Einkaufswagen, bereitgestellt werden können.
Da man im Auto gewöhnlich immer einen Regenschirm mit sich führt, ist das Zurückbringen der aus einem Einkaufswagen und aus einer Überdachungseinrichtung bestehenden Transportwageneinheit zu einer Sammelstelle kein Problem. Auf dem sich anschließenden Weg zurück zum Auto wird bei Regen einfach der Schirm benutzt. Auch vor dem Einkaufen auf dem Weg zu einer Sammelstelle wird man bei Regen in den meisten Fällen einen Schirm mit sich führen. Dennoch ist die Überdachungseinrichtung von Vorteil, weil diese auch die im Warenkorb befindliche Ware vor Nässe schützt.
Überaus praktisch ist die Nutzung einer Überdachungseinrichtung auch dann, wenn sich im Korb des Einkaufswagens zum Auftauen neigende Ware befindet und der Kunde das Ende eines Regenschauers nicht abwarten kann oder will, um die Ware, zu Hause angekommen, rasch im Kühlschrank unterbringen zu können.

Es ist von Vorteil, wenn die Überdachungseinrichtung zwei hintere Fahrrollen und in kostengünstiger Weise nur eine vordere Fahrrolle aufweist. Dann nämlich lässt sich ein von Hand bewegbarer Transportwagen mit angekoppelter Überdachungseinrichtung nach wie vor sehr leicht lenken.

Vorteilhaft ist auch, wenn die Überdachungseinrichtung zwei dehnbare Einhängeelemente aufweist, die an der Stützeinrichtung so angeordnet sind, dass in angekoppeltem Zustand die beiden Einhängelemente jeweils seitlich an einer, beispielsweise an einem Einkaufswagen befindlichen Kindersitzeinrichtung vorbeiführen und unter Spannung am Griff des Einkaufswagens eingehängt sind, wobei es unerheblich ist, ob sich ein Kind in der Kindersitzeinrichtung befindet oder nicht. Gleiches gilt auch, wenn der als Einkaufswagen gestaltete Transportwagen mit einer oder mit zwei so genannten Babyschalen ausgestattet ist.

Als zweckmäßig erweist sich, wenn die Überdachungseinrichtung einen quer verlaufenden Schiebegriff aufweist. Dann lässt sich die Überdachungseinrichtung auch in nicht angekoppeltem Zustand leicht bewegen, halten oder steuern, etwa beim Einschieben in einen Stapel gleicher Überdachungseinrichtungen.

Von Vorteil ist ferner, wenn die hinteren Fahrrollen mit einer Arretiereinrichtung ausgestattet sind, die ein Bewegen dieser Fahrrollen dann verhindert, wenn ein angekoppelter Einkaufswagen bei Wind entladen wird.

Um bei Wind auf die Überdachungseinrichtung einwirkende Auftriebskräfte zu reduzieren ist es ebenfalls von Vorteil, wenn das Dach aus wenigstens zwei Dachabschnitten gebildet und zwischen den Dachabschnitten wenigstens ein Durchbruch oder Zwischenraum zum Durchströmen von Wind vorgesehen ist. Diese Ausgestaltung des Daches macht sich den physikalischen Effekt zunutze, wonach sich an Kanten von Gegenständen, die von gasförmigen Medien umströmt werden, gegenläufige Wirbel bilden, die sich auf das Strömungsgesamtsystem energiemindernd auswirken und mögliche Auftriebskräfte abmildern helfen.
Dabei erweist es sich ebenfalls als vorteilhaft, die Dachabschnitte sich überlappend und geneigt anzuordnen. Der vordere Dachabschnitt kann an der Stützeinrichtung bewegbar und arretierbar so angeordnet sein, dass der vordere Dachabschnitt auf und ab und wieder zurück bewegt werden kann. Dadurch lässt sich im Korb befindliche Ware noch besser vor Nässe schützen.

Schließlich ergibt sich ein weiterer Vorteil, wenn die Dachabschnitte, in Draufsicht betrachtet, gemeinsam einen trapezförmigen Grundriss bilden. Das erleichtert das Ineinanderschieben gleicher Überdachungseinrichtungen. Der gemeinsame trapezförmige Grundriss erlaubt einen materialsparenden Zuschnitt von Dachabschnitten dann, wenn, wie nachfolgend zeichnerisch dargestellt, die Dachabschnitte beispielsweise aus Plexiglaszuschnitten gebildet und gleich lang sind.

Die Erfindung wird anhand von Ausführungsbeispielen näher erläutert. Es zeigt
- Fig. 1: eine Überdachungseinrichtung in Seitenansicht;
- Fig. 2: die gleiche Überdachungseinrichtung in Seitenansicht, jedoch ohne Dach;
- Fig. 3: eine Überdachungseinrichtung sowie einen in diese eingeschobenen Transportwagen, um eine Transportwageneinheit zu bilden;
- Fig. 4: zwei platzsparend gestapelte Überdachungseinrichtungen;
- Fig. 5: in Seitenansicht eine mit zwei Dachabschnitten ausgestattete Überdachungseinrichtung;
- Fig. 6: in Draufsicht zwei sich überlappende Dachabschnitte;
- Fig. 7: einen Zuschnitt für die beiden Dachabschnitte sowie
- Fig. 8: eine Überdachungseinrichtung gemäß Fig. 5 mit eingeschobenem Transportwagen.

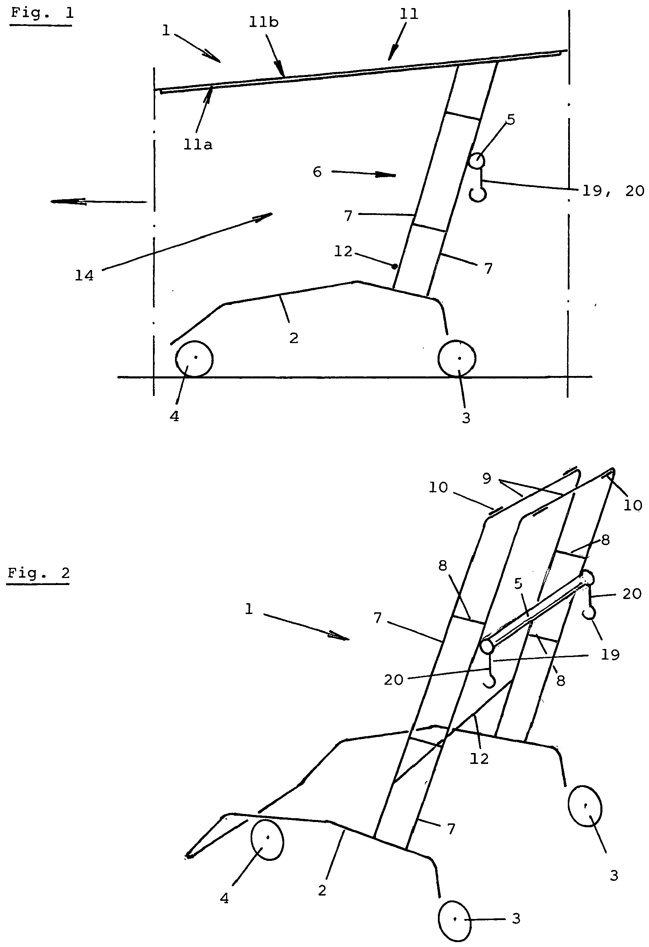

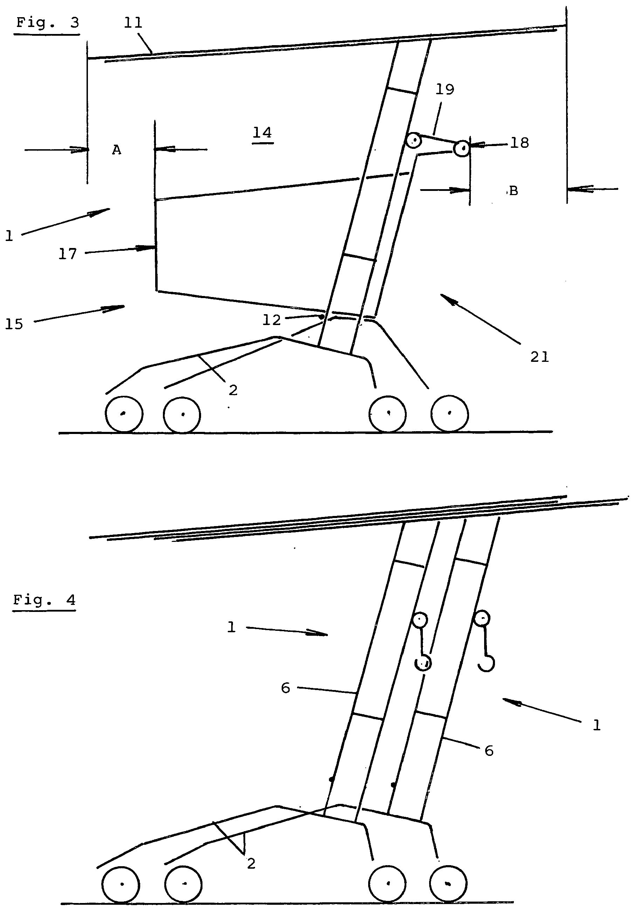

Fig. 1 zeigt eine Überdachungseinrichtung 1 in Seitenansicht. Die Überdachungseinrichtung 1 weist einen Fahrrahmen 2 auf, der mit zwei hinteren Fahrrollen 3 und mit wenigstens einer vorderen Fahrrolle 4 ausgestattet ist. Im Falle von nur einer vorderen Fahrrolle 4 ist diese am vorderen Abschnitt des Fahrrahmens 2 mittig angeordnet. Am Fahrrahmen 2 ist eine Stützeinrichtung 6 vorgesehen, die sich nach oben erstreckt. Die Stützeinrichtung 6 kann Bestandteil des Fahrrahmens 2 sein. Sie kann aber auch getrennt vorliegen und mit dem Fahrrahmen 2, etwa durch Verschrauben, verbunden sein. Ein mögliches Ausführungsbeispiel für den Aufbau einer Stützeinrichtung 6 ist in Fig. 2 beschrieben. Die Stützeinrichtung 6 trägt ein Dach 11, das beispielsweise einen Rahmen 11a aufweist, der zum Tragen von wenigstens einem als Abdeckplatte gestalteten Dachabschnitt 11b, beispielsweise aus Plexiglas, bestimmt ist. Der Rahmen 11a kann an der Stützeinrichtung 6 entweder angeschraubt oder mit dieser verschweißt sein. Das Dach 11 ist in Schiebrichtung der Überdachungseinrichtung 1, siehe Pfeil, nach vorn geneigt angeordnet. Die somit fahrbar ausgebildete Überdachungseinrichtung 1 ist bevorzugt mit wenigstens einer Kopplungseinrichtung 19 ausgestattet. Es bieten sich bekannte Kopplungseinrichtungen 19 an, wobei im Beispiel als Kopplungseinrichtung 19 zwei entlang ihrer Längserstreckung dehnbar ausgebildete Einhängeelemente 20 vorgesehen sind, die an der Stützeinrichtung 6 befestigt sind und zum Einhängen am Schiebegriff 16 eines von Hand bewegbaren Transportwagens 15, insbesondere eines Einkaufswagens, vorgesehen sind, siehe Fig. 3. Die Überdachungseinrichtung 1 kann einen quer verlaufenden Schiebegriff 5 aufweisen. Strichpunktiert ist eine Raumzone 14 eingezeichnet, die zur Aufnahme eines von Hand bewegbaren Transportwagens 15 bestimmt ist. Die Dimension der Raumzone 14 ist im Beispiel bestimmt durch den lichten Abstand der Stützstreben 7 der Stützeinrichtung 6, siehe Fig. 2, durch die vom Fußboden gemessenen Höhen des Daches 11 und durch die horizontal gemessene Länge der Überdachungseinrichtung 1. Andere räumlich gestalteten Raumzonen 14 sind je nach Gestaltung der Überdachungseinrichtung 1 und des Transportwagens 15 durchaus möglich.

In einer räumlichen Darstellung zeigt Fig. 2 die in Fig. 1 beschriebene Überdachungseinrichtung 1, jedoch ohne Dach 11. Der Fahrrahmen 2 orientiert sich am Aufbau eines Fahrrahmens, wie dieser durch übliche Einkaufswagen bekannt ist. Unabhängig davon ist die Gestaltung des Fahrrahmens 2 dennoch beliebig wählbar. Der Fahrrahmen 2 muß lediglich so ausgebildet sein, dass erstens ein von Hand bewegbarer Transportwagen 15 von der Raumzone 14, siehe Fig. 1, aufgenommen werden kann und er muß zweitens so gestaltet sein, dass die Überdachungseinrichtung 1 mit gleichen Überdachungseinrichtungen 1 platzsparend gestapelt werden kann, wie man dies von Einkaufswagen her kennt, die in Stapeln bereitgestellt sind. Zweckmäßigerweise weist der Fahrrahmen 2 von oben betrachtet einen trapezförmigen Grundriss auf, dessen längere parallele Seite fehlt. Im Beispiel weist die Überdachungseinrichtung 1 zwei U-förmige Stützstreben 7 auf, die durch einzelne Streben 8 verbunden sind. Eine der beiden Stützstreben 7 ist durch eine Querstrebe 12 verbunden. Im Beispiel sind die beiden Stützstreben 7 in Seitenansicht betrachtet näher an den hinteren Fahrrollen 3 angeordnet als an der wenigstens einen vorderen Fahrrolle 4. Je nach Ausführung ist an den oberen quer verlaufenden Abschnitten 9 der Stützstreben 7 eine Anzahl von Anschraubplatten 10 vorgesehen, mit deren Hilfe sich das Dach 11 an der Stützeinrichtung 6 befestigen lässt. Die Stützeinrichtung 6 kann einen quer verlaufenden Schiebegriff 5 aufweisen, der an zwei Stützstreben 7 befestigt ist. Im Bereich der beiden für den Schiebegriff 5 bestimmten Befestigungsabschnitte ist je ein in Längsrichtung dehnbares Einhängeelement 20 angeordnet, wobei jedes Einhängeelement 20 in Nichtgebrauchslage nach unten hängt und zum Ankoppeln eines von Hand bewegbaren Transportwagens 15 an die Überdachungseinrichtung 1 vorgesehen ist. Die beiden Einhängeelemente 20 bilden zumindest eine Kopplungseinrichtung 19. Die beiden hinteren Fahrrollen 3 können mit jeweils einer bekannten Arretiereinrichtung ausgestattet sein, welche bewirkt, dass die Räder der hinteren Fahrrollen 3 blockiert sind. Die hinteren Fahrrollen 3 können entweder bevorzugt als bekannte Lenkrollen oder wenn geeignet, auch als bekannte Bockrollen ausgebildet sein. Die wenigstens eine vordere Fahrrolle 4 hingegen ist als Lenkrolle gestaltet.

In einer Seitenansicht zeigt Fig. 3 einen in eine Überdachungseinrichtung 1 platzsparend eingeschobenen, von Hand bewegbaren Transportwagen 15. Im Beispiel ist der Transportwagen 15 ein handelsüblicher Einkaufswagen. Der Transportwagen 15 ist mittels der wenigstens einen Kopplungseinrichtung 19 an die Überdachungseinrichtung 1 angekoppelt, so dass eine Transportwageneinheit 21 gebildet ist, die aus dem von Hand bewegbaren Transportwagen 15 und der Überdachungseinrichtung 1 gebildet ist, wobei der Transportwagen 15 von der Raumzone 14 der Überdachungseinrichtung 1 aufgenommen und mit der Überdachungseinrichtung 1 lösbar verbunden ist. Diese lösbare Verbindung liegt auch ohne Verwendung von wenigstens einer Kopplungseinrichtung 19 vor. Der Fahrrahmen 2 weist wenigstens einen Anschlag zur Begrenzung der Einschubtiefe eines von Hand bewegbaren Transportwagens 15 auf. Der Anschlag kann durch die Querstrebe 12 gebildet sein, wie in Fig. 2 dargestellt. Beim Einschieben des Transportwagens 15 in die Überdachungseinrichtung 1 stößt der Transportwagen 15 an die Querstrebe 12 an. Aus der Zeichnung ist ersichtlich, dass bei der so gebildeten Transportwageneinheit 21 das Dach 11 der Überdachungseinrichtung 1 um das Maß A über die vorderste Begrenzung 17 des von Hand bewegbaren Transportwagens 15 vorsteht. Dadurch wird verhindert, dass bei Regen vom vorderen Ende des Daches 11 Regenwasser in die Warenaufnahmeeinrichtung des von Hand bewegbaren Transportwagens 15 tropft. Bei einem Einkaufswagen wäre dies bekanntermaßen dessen Korb. Gleichsam macht es Sinn, das Dach 11 nach hinten, um das Maß B, über die hinterste Begrenzung 18 des Transportwagens 15 hinausragen zu lassen, um bei Regen auch einen Regenschutz für den Benutzer der Transportwageneinheit 21 zu garantieren. Die Länge des Daches 11 ist damit größer als die Länge eines von Hand bewegbaren Transportwagens 15, der in die Überdachungseinrichtung 1 eingeschoben ist. Es bietet sich aus Kostengründen an, bei der Transportwageneinheit 21 den Fahrrahmen 2 der Überdachungseinrichtung 1 dem Fahrrahmen des von Hand bewegbaren Transportwagens 15 anzupassen, so dass gleiche Fahrrahmen 2 sowohl für die Überdachungseinrichtung 1 als auch für die Transportwagen 15 vorliegen und verwendbar sind, vgl. auch Anmerkungen in der Beschreibung zu Fig. 1. Dabei ist der von Hand bewegbare Transportwagen 15 im in die Überdachungseinrichtung 1 eingeschobenem Zustand nach vorne und mit seinen beiden Längsseiten an der Überdachungseinrichtung 1 abgestützt, was zu einer kompakten Anordnung führt, die sich leicht und bequem bewegen lässt.

Fig. 4 zeigt zwei gleiche und platzsparend ineinander geschobene Überdachungseinrichtungen 1. Der Fahrrahmen 2, die Stützeinrichtung 6 sowie das Dach 11 sind so gestaltet, dass ein platzsparendes Stapeln, so wie gezeichnet, und bevorzugt unter Verwendung bekannter Münzpfandschlösser, möglich ist. Für den Fachmann bekannte konstruktive Maßnahmen wie Trapezform, Neigung, Konizität, Keilform usw. ermöglichen das platzsparende Ineinanderschieben mehrerer gleicher Überdachungseinrichtungen 1.

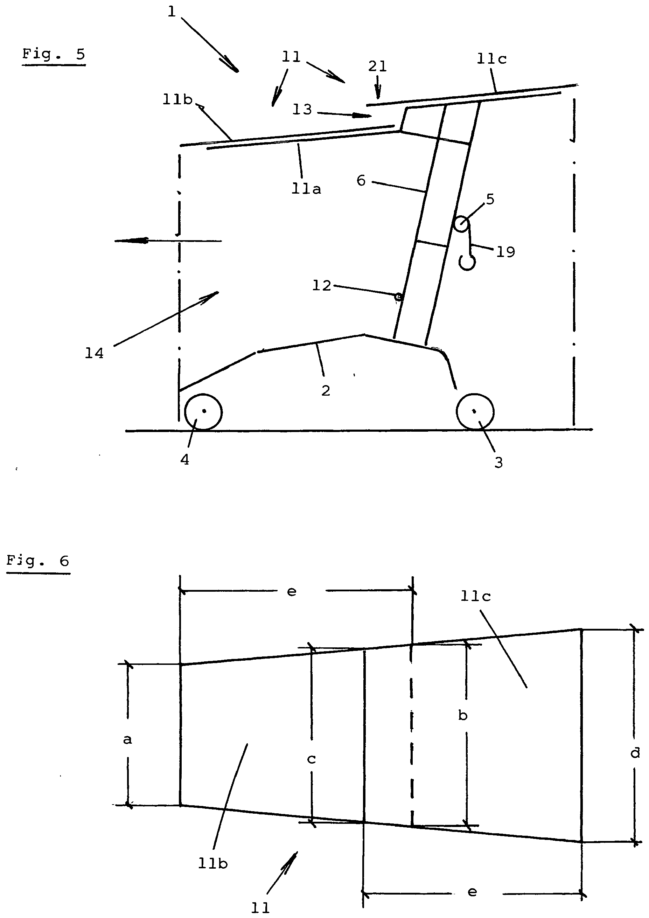

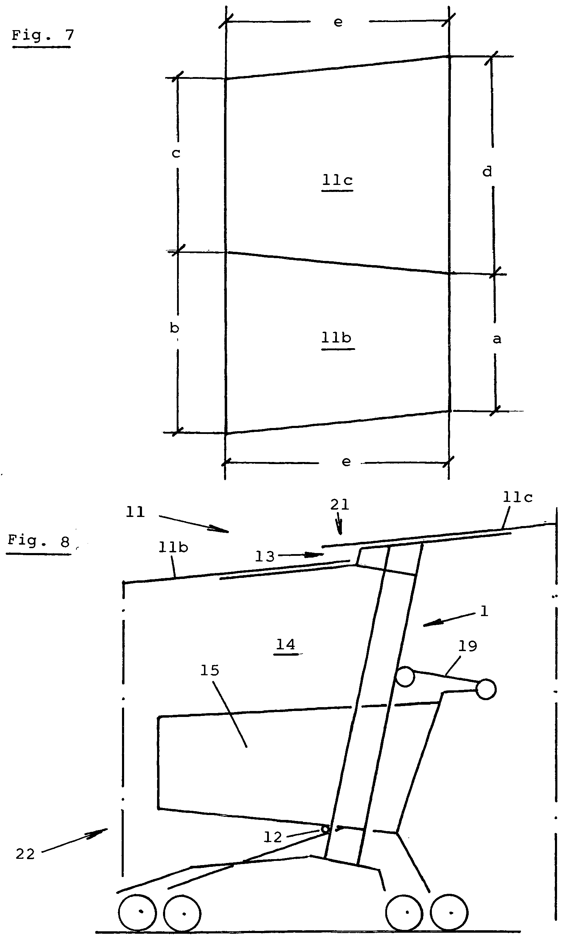

Fig. 5 zeigt in Seitenansicht eine weitere Überdachungseinrichtung 1, die sich, ihre Bauweise betreffend, an der in Fig. 1 beschriebenen Überdachungseinrichtung 1 orientiert. Das Dach 11 der hier beschriebenen Überdachungseinrichtung 1 ist wieder in Schieberichtung der Überdachungseinrichtung 1 nach vorne geneigt angeordnet, weist jedoch zwei Dachabschnitte 11b und 11c auf, die vom Rahmen 11a getragen werden. Die Dachabschnitte 11b und 11 c sind überlappend und bevorzugt parallel oder leicht winklig zueinander angeordnet. Die Überlappung ist so gewählt, dass zwischen dem Dachabschnitt 11b und dem Dachabschnitt 11c ein Durchbruch 13 oder Zwischenraum 13 derart gebildet ist, dass bei auftretendem Wind ein nicht unerheblicher Teil des Windes den Durchbruch 13 durchströmen kann. Strömt beispielsweise, bezogen auf die Zeichnung, der Wind von links nach rechts, bildet sich an der Vorderkante des Dachabschnittes 11b ein linksdrehender und an der Hinterkante des Dachabschnittes 11b ein rechtsdrehender Wirbel. Ebenso bildet sich an der Vorderkante des Dachabschnittes 11 c wieder ein linksdrehender und an der Hinterkante des Dachabschnittes 11c ein rechtsdrehender Wirbel. Im Bereich der Überlappung 21 stellen sich somit zusätzlich zwei gegenläufige Wirbel ein, die von der auftretenden Windenergie zehren und damit beitragen, dass die auf die Überdachungseinrichtung 1 einwirkende Windenergie abgeschwächt und daher die Gefahr des Anhebens der Überdachungseinrichtung 1 bei starkem Wind reduziert wird. Die Überdachungseinrichtung 1 weist ebenfalls bevorzugt eine Kopplungseinrichtung 19 und einen Schiebegriff 5 auf. Strichpunktiert ist die Raumzone 14 eingezeichnet, die zur Aufnahme eines von Hand bewegbaren Transportwagens 15 geeignet ist. An der Stützeinrichtung 6 ist ein Anschlag 12 in Form einer Querverbindung vorgesehen. Ist der Transportwagen 15 ein bekannter handelsüblicher Einkaufswagen und befindet sich dieser Einkaufswagen in der Raumzone 14 der Überdachungseinrichtung 1, so ist der Anschlag 12 ganz knapp unterhalb des Korbes des Einkaufswagens angeordnet, siehe auch Fig. 8. Greift starke Windlast an der Überdachungseinrichtung 1 an mit der Folge, dass die Überdachungseinrichtung 1 angehoben werden könnte, stützt sich die Überdachungseinrichtung 1 mit ihrem Anschlag 12 an der Unterseite des Korbes des Einkaufswagens ab und kann somit nicht angehoben werden, da das Gewicht des Einkaufswagens dagegen hält, siehe ebenfalls Fig. 8.

Es ist möglich und ohne zeichnerisch dargestellt zu sein, den Rahmen 11 a in einen vorderen Abschnitt und in einen hinteren Abschnitt aufzuteilen. Dabei ist der hintere Abschnitt, welcher den Dachabschnitt 11c trägt, nach wie vor ostsfest mit der Stützeinrichtung 6 verbunden. Der vordere Abschnitt, an dem der Dachabschnitt 11b angeordnet ist, kann hingegen entlang der Stützeinrichtung 6 bewegbar an dieser angeordnet sein, so dass sich der vordere Abschnitt zusammen mit dem Dachabschnitt 11b begrenzt von oben nach unten und von unten nach oben bewegen lässt. Ein nach unten bewegter Dachabschnitt 11b kann somit den darunter befindlichen Korb eines Transportwagens 15, beispielsweise den eines Einkaufswagens, noch besser vor Nässe schützen. Um dies zu verwirklichen sind am vorderen Abschnitt passende Gleit- oder Rollelemente notwendig, mit deren Hilfe sich der vordere Abschnitt, und damit der Dachabschnitt 11b, an der Stützeinrichtung 6 angeordnet, entlang den Streben der Stützeinrichtung 6 bewegen lässt. Eine auf den vorderen Abschnitt des Rahmens 11a einwirkende Federungseinrichtung wäre dabei so zu wählen, dass der vordere Abschnitt zusammen mit dem Dachabschnitt 11b immer nach oben gezogen wird, um an einem Anschlag anzuschlagen. Ebenso wäre an der Stützeinrichtung 6 und am genannten vorderen Abschnitt eine Rasteinrichtung vorzusehen, die sowohl ein Arretieren als auch ein anschließendes Lösen des mit Hilfe des vorderen Abschnitts nach unten bewegten Dachabschnittes 11b ermöglichen würde.

Fig. 6 zeigt in einer Draufsicht das Dach 11 der Überdachungseinrichtung 1 gemäß Fig. 5. Die beiden überlappend angeordneten Dachabschnitte 11b, 11c bilden zusammen einen trapezförmigen Grundriss. Die Bedeutung der Maße a bis e wird in der Beschreibung zu Fig. 7 erklärt.

Als Zuschnitt zeigt Fig. 7 die beiden Dachabschnitte 11b und 11 c. An den flächenmäßig kleineren Dachabschnitt 11b schließt unmittelbar und ohne Verschnitt der flächenmäßig größere Dachabschnitt 11c an. Die in Schieberichtung der Überdachungseinrichtung 1 gemessene Länge e der beiden Dachabschnitte 11b, 11c ist gleich. Das Maß d ist größer als jedes einzelne der Maße a bis c. Das Maß b ist größer als das Maß c und Maß c ist wiederum größer als das Maß a. Aufgrund dieser Maßverhältnisse fällt beim Herstellen der beiden Dachabschnitte 11b und 11c nur unwesentlich Verschnitt an, was einen Kostenvorteil darstellt.

Fig. 8 zeigt einen Transportwagen 15, der in die Überdachungseinrichtung 1 eingeschoben ist und sich in der Raumzone 14 befindet. Zu ihren beiden Längsseiten ist die Überdachungseinrichtung 1 an den Seitenwänden des Korbes des als Einkaufswagen gestalteten Transportwagens 15 abgestützt, da sich der Transportwagen 15 zwischen der Stützeinrichtung 6 befindet. Ein Anheben der Überdachungseinrichtung 1 ist nicht möglich, da bei einem solchen Vorgang der Anschlag 12 an die Unterseite des Korbes anstößt. Durch die wenigstens eine Kopplungseinrichtung 19 ist der Transportwagen 15 an die Überdachungseinrichtung 1 angekoppelt, so dass die Überdachungseinrichtung 1 und der in die Überdachungseinrichtung 1 eingeschobene Transportwagen 15 eine kompakte Einheit bilden,
Anstelle von nur zwei Dachabschnitten 11b und 11 c können durchaus auch drei oder mehr bevorzugt gleich lange Dachabschnitte, es wären die Dachabschnitte 11d, 11e usw., vorgesehen sein, an deren Überlappungen 21 jeweils ein Durchbruch 13 zum Durchströmen von Wind vorgesehen ist. Jede Überlappung 21 ist so gewählt, dass Regenwasser vom jeweils höheren Dachabschnitt 11b auf den nächstfolgenden tiefer gelegenen Dachabschnitt 11c usw. tropfen kann. Die nicht parallelen Längsseiten der Dachabschnitte 11b usw. können entweder nach oben erhöht ausgebildet oder von Erhöhungen begrenzt sein, die sich am Rahmen 11a des Daches 11 befinden. Die Überdachungseinrichtung 1 ist so gestaltet, dass diese in eine weitere gleiche Überdachungseinrichtung 1 platzsparend eingeschoben werden kann. Die Überdachungseinrichtung 1 bildet zusammen mit einem in die Überdachungseinrichtung 1 eingeschobenen Transportwagen 15 eine Transportwageneinheit 22.

## Patentansprüche

1. Überdachungseinrichtung (1) für einen von Hand bewegbaren Transportwagen (15), insbesondere für einen Einkaufswagen, mit einer nach oben gerichteten Stützeinrichtung (6), die ein Dach (11) trägt, **dadurch gekennzeichnet, dass** die Überdachungseinrichtung (1) fahrbar ausgebildet ist und eine Raumzone (14) zur Aufnahme des von Hand bewegbaren Transportwagens (15) aufweist.

2. Überdachungseinrichtung nach Anspruch 1, **dadurch gekennzeichnet, dass** diese (1) einen Fahrrahmen (2) aufweist, an dem die Stützeinrichtung (6) entweder befestigt oder Bestandteil des Fahrrahmens (2) ist.

3. Überdachungseinrichtung nach Anspruch 2, **dadurch gekennzeichnet, dass** der Fahrrahmen (2) einen trapezförmigen Grundriss aufweist, dessen längere parallele Seite fehlt.

4. Überdachungseinrichtung nach Anspruch 2, **dadurch gekennzeichnet, dass** der Fahrrahmen zwei hintere Fahrrollen (3) und wenigstens eine vordere Fahrrolle (4) aufweist.

5. Überdachungseinrichtung nach Anspruch 2, **dadurch gekennzeichnet, dass** der Fahrrahmen (2) wenigstens einen Anschlag (12), etwa eine Querverbindung, zur Begrenzung der Einschubtiefe für einen von Hand bewegbaren Transportwagen (15) aufweist.

6. Überdachungseinrichtung nach Anspruch 1, **dadurch gekennzeichnet, dass** diese (1) in eine gleiche Überdachungseinrichtung (1) platzsparend einschiebbar ist.

7. Überdachungseinrichtung nach Anspruch 1, **dadurch gekennzeichnet, dass** das Dach (11) in Schieberichtung der Überdachungseinrichtung (1) nach vorne geneigt angeordnet ist.

8. Überdachungseinrichtung nach Anspruch 1, **dadurch gekennzeichnet, dass** das Dach (11) aus wenigstens zwei Dachabschnitten (11b, 11 c usw.) gebildet ist und dass zwischen den Dachabschnitten (11b, 11c usw.) wenigstens ein Durchbruch (13) zum Durchströmen von Wind vorgesehen ist.

9. Überdachungseinrichtung nach Anspruch 8, **dadurch gekennzeichnet, dass** die wenigstens zwei oder mehr Dachabschnitte (11b, 11c usw.) sich überlappend und durch den mindestens einen Durchbruch (13) getrennt, angeordnet sind.

10. Überdachungseinrichtung nach Anspruch 8, **dadurch gekennzeichnet, dass** in Draufsicht betrachtet die wenigstens zwei oder mehr Dachabschnitte (11b, 11 c usw.) zusammen einen trapezförmigen Grundriss bilden.

11. Überdachungseinrichtung nach Anspruch 8, **dadurch gekennzeichnet, dass** die nicht parallelen Längsseiten der Dachabschnitte (11b, 11c usw.) entweder erhöht ausgebildet oder von Erhöhungen begrenzt sind, die sich am Rahmen (11a) des Daches (11) befinden.

12. Überdachungseinrichtung nach Anspruch 8, **dadurch gekennzeichnet, dass** der Dachabschnitt (11b) an der Stützeinrichtung (6) so angeordnet ist, dass dieser entlang der Stützeinrichtung (6) von oben nach unten und von unten nach oben bewegbar ist.

13. Transportwageneinheit (21) mit einem von Hand bewegbaren Transportwagen (15) und mit einer Überdachungseinrichtung (1), **dadurch gekennzeichnet, dass** sich der Transportwagen (15) in einer durch die Überdachungseinrichtung (1) gebildeten Raumzone (14) befindet und dass die Überdachungseinrichtung (1) fahrbar ausgebildet ist.

14. Transportwageneinheit nach Anspruch 13, **dadurch gekennzeichnet, dass** der von Hand bewegbare Transportwagen (15) im in die Überdachungseinrichtung (1) eingeschobenen Zustand nach vorne und mit seinen beiden Längsseiten an der Überdachungseinrichtung (1) abgestützt ist.

15. Transportwageneinheit nach Anspruch 13, **dadurch gekennzeichnet, dass** die Länge des Daches (11) größer ist als die Länge des in die Überdachungseinrichtung (1) eingeschobenen, von Hand bewegbaren Transportwagens (15).
